# EUROPÄISCHE PATENTSCHRIFT

(11) **EP 0 551 839 B1**
(45) Veröffentlichungstag und Bekanntmachung des Hinweises auf die Patenterteilung: **17.04.1996**
(21) Anmeldenummer: 93100248.9
(22) Anmeldetag: 09.01.1993
(51) Int. Cl.: B60J 7/043

(54) **Aufsatzschiebedach für Kraftfahrzeuge**
Sun roof sliding above the motor vehicle roof
Toit ouvrant pour voiture automobile coulissant au-dessus du toit

(30) Priorität: 14.01.1992 DE 4200726
(43) Veröffentlichungstag der Anmeldung: 21.07.1993
(73) Patentinhaber: Rockwell Golde GmbH, D-60314 Frankfurt (DE)
(72) Erfinder: Schlapp, Albert, W-6072 Dreieich (DE); Pfeifer, Günter, W-8751 Niedernberg (DE); Heindl, Ralf, Dipl.-Ing., W-8758 Goldbach (DE); Scheuermann, Bernhard, Dipl.-Ing., W-6052 Mühlheim (DE)
(74) Vertreter: Oppermann, Ewald, Dipl.-Ing.

(56) Entgegenhaltungen:
- EP-A- 0 150 470
- EP-A- 0 244 110
- EP-A- 0 363 912
- WO-A-92/04199
- GB-A- 2 202 580

## Beschreibung

Die Erfindung bezieht sich auf ein Aufsatzschiebedach entsprechend dem Oberbegriff des Patentanspruchs 1.

Bei einer derartigen bekannten Dachkonstruktion (EP 0 403 388 A1) sind an den seitlichen Rändern des Schiebedeckels Deckelträger befestigt, welche über die Ränder des Schiebedeckels nach außen vorstehen, so daß bei geschlossenem Schiebedeckel zwischen diesem und seitlichen Führungsschienenverkleidungen nach oben offene breite Spalte gebildet sind. Durch diese Spalte können Wasser und Schmutz ungehindert eindringen, was sehr nachteilig ist, weil sich die Führungselemente für den Schiebedeckel ungeschützt unterhalb der offenen Spalte befinden und damit einer funktionsstörenden Verschmutzung direkt ausgesetzt sind. Die Spalte in Verbindung mit den Führungsschienenverkleidungen verursachen außerdem störende Luftströmungsgeräusche im Fahrbetrieb. Ein Abdecken der Spalte durch die Führungsschienenverkleidungen ist nicht möglich, weil bei dieser bekannten Dachkonstruktion die Spalte bei Deckelausschwenkbewegungen für die mit nach oben verschwenkenden über die Deckelkontur vorstehenden Deckelträger benötigt werden. Darüberhinaus weist die bekannte Dachkonstruktion eine beträchtliche die Anströmfläche der Fahrzeugkarosserie vergrössernde Bauhöhe und damit einen erheblichen zusätzlichen Luftwiderstand auf, weil zur Deckelbetätigung vorgesehene Steuerschieber senkrecht und ihre Führungskanäle in den seitlichen Führungsschienen übereinander angeordnet sind. Schließlich ist bei der bekannten Dachkonstruktion nachteilig, daß die Mehrteiligkeit der den Schiebedeckel lagernden Rahmenkonstruktion die Vorfertigung einer funktionsfähigen Aufsatzdacheinheit praktisch ausschließt.

Der Erfindung liegt die Aufgabe zugrunde, ein Aufsatzschiebedach der im Oberbegriff des Patentanspruchs 1 angegebenen Gattung bereitzustellen, bei dem die Führungs- und Funktionsteile gegen Verschmutzen geschützt sind, das strömungsgünstig ausgebildet ist und das bei einfacher Konstruktion vollständig und betätigungsbereit vorgefertigt werden kann.

Die gestellte Aufgabe wird erfindungsgemäß durch die kennzeichnenden Merkmale des Patentanspruchs 1 gelöst.

Der einteilige, für den vorgesehenen Zweck U-förmige Außenrahmen kann wegen der besonderen Anordnung der Führungsnuten für die Führungsschuhe in Verbindung mit der Ausgestaltung des Profilkanals vergleichsweise flach und damit strömungsgünstig ausgeführt werden, wobei er fertigungsgünstig eine durchgehend gleichbleibende Profilierung aufweisen kann. Durch die bündige Lage seiner oberen Fläche mit der oberen Fläche des Schiebedeckels und die Zwischenlage einer ebenfalls bündig anschliessenden Randspaltabdichtung werden Windgeräusche erheblich reduziert, wobei gleichzeitig das Eindringen von Wasser und Schmutz verhindert, mindestens aber erheblich erschwert wird. Darüberhinaus sind die Führungsnuten für die Führungsschuhe so geschützt innerhalb des Außenrahmens angeordnet, daß diese wirksam gegen Verschmutzen geschützt sind. Der einteilige Außenrahmen trägt als Montagerahmen alle Führungs- und Funktionsteile des Aufsatzschiebedaches, so daß dieses weitgehend vorgefertigt und vor der Montage auf Funktion geprüft werden kann.

Vorteilhafte Aus- und Weiterbildungen der Erfindung sind in den Unteransprüchen angegeben und nachstehend erläutert.

Wird das Aufsatzschiebedach entsprechend dem Oberbegriff des Anspruchs 2 zusätzlich ausgebildet, so wird durch die kennzeichnenden Merkmale dieses Anspruchs das Aufsatzschiebedach zu einem Aufsatzschiebehebedach ausgebildet, ohne daß die vorstehend angegebenen Vorteile auch nur teilweise in Frage gestellt sind. Insbesondere sind hierbei keine unabdichtbaren Spalte für den Durchtritt von an Ausschwenkbewegungen des Schiebedeckels teilnehmenden Funktionsteilen vorgesehen.

Die im Anspruch 3 angegebene Besonderheit führt nicht nur zu einer Versteifung des Dachöffnungsrandes, sondern erzeugt auch einen um die Dachöffnung umlaufenden Anbringungsort und Träger für ein Abdichtprofil. Außerdem verhindert die Aufkantung zuverlässig das Eindringen von Wasser in die Dachöffnung. Auf diese Weise wird erreicht, daß der geschlossene Deckel auch an seiner Hinterkante und seinen Eckbereichen gegenüber der Dachöffnung abgedichtet ist, ohne Zuhilfenahme von zusätzlichen Quertraversen zwischen den Rahmenschenkeln oder in die Dachöffnung eingesetzte nach innen vorstehende zusätzliche Rahmen für die Aufnahme einer Deckeldichtung.

Die erfindungsgemäße Dachkonstruktion kann durch die im Anspruch 4 angegebenen Maßnahmen vorteilhaft für den bekannten Schiebedeckelantrieb mittels Antriebskabel ausgestaltet werden.

Eine weitere Herabsetzung des Windwiderstandes wird durch das Merkmal gemäß Anspruch 5 erzielt.

Zweckmäßig wird der Außenrahmen an seinen Biegeecken entsprechend Anspruch 6 ausgestaltet, um eine Fertigungserleichterung zu ermöglichen und Biegedeformationen an den angegebenen Stellen zu vermeiden. Außerdem können auf die angegebene Weise kleinere Biegeradien für den Außenrahmen erzielt werden.

Die Ansprüche 7 und 8 kennzeichnen bevorzugte Ausgestaltungen des Außenrahmens für die bündige Anbringung bzw. Befestigung der Randspaltabdichtung am Rahmen. Hierbei läßt sich entsprechend Anspruch 9 eine über die gesamte Länge des Außenrahmens durchgehend gleichbleibende Ausbildung des Rahmenprofils und der Randspaltabdichtung erzielen.

Wie im Anspruch 10 angegeben ist, kann die Randspaltabdichtung seitlich als elastisch leicht verformbares Hohlprofil ausgebildet werden, was bei zuverlässiger Abdichtung gegenüber dem Schiebedeckel dennoch bei der Verschiebung des Deckels nur einen geringen Reibungswiderstand verursacht. Im vorderen Bereich ist die Randspaltabdichtung gemäß Anspruch 10 dagegen vorteilhaft so ausgebildet, daß der an diesen Bereich mit seiner Vorderkante anstoßende geschlossene Schiebedeckel von der Randspaltabdichtung niedergehalten und dem an der Dachöffnung befindlichen Abdichtprofil angedrückt wird.

Vorteilhaft wird der Außenrahmen auf der festen Dachfläche mittels eines besonders ausgebildeten Gegenrahmens entsprechend Anspruch 11 befestigt. An dem Gegenrahmen kann auf die im Anspruch 12 angegebene Weise ein Führungsrahmen für eine verschiebbare Sonnenschutzplatte angebracht werden, wobei der Führungsrahmen zugleich zur Befestigung eines Formhimmels nutzbar gemacht werden kann. Durch entsprechende Profilierung und Ausbildung des Gegenrahmens wird der Dachöffnungsrand zusätzlich versteift.

Ein Ausführungsbeispiel, das die Anwendung der Erfindung bei einem Aufsatzschiebehebedach betrifft, wird nachfolgend anhand der Zeichnungen näher erläutert. Darin zeigt:
- Fig. 1: die abgebrochene Draufsicht auf ein Kraftfahrzeugdach mit daran angebrachtem Aufsatzschiebehebedach bei in Schließstellung befindlichem Schiebedeckel,
- Fig. 2 bis 5: Schnittansichten entlang der Linien II-II bis V-V in Fig. 1,
- Fig. 6 bis 9: in ab- und aufgebrochenen unterschiedlichen Draufsichten Sperrelemente für die Verhinderung unerwünschter Schiebebewegungen des Schiebedeckels, dargestellt für verschiedene Deckelstellungen,
- Fig. 10: die ab- und aufgebrochene Draufsicht auf einen hinteren Führungsschuh und eine zugeordnete Führungskulisse,
- Fig. 11: eine abgebrochene Schnittansicht entlang der Linie XI-XI in Fig. 10 bei ausgeschwenktem Schiebedeckel,
- Fig. 12: eine der Fig. 11 ähnliche Schnittansicht bei geschlossenem Schiebedeckel,
- Fig. 13: eine den Fig. 11 und 12 ähnliche Schnittansicht bei zur Öffnungsverschiebung angehobenem Schiebedeckel,
- Fig. 13a: eine der Fig. 13 ähnliche Schnittansicht bei zur Öffnungsverschiebung abgesenktem Schiebedeckel eines (nicht aufgesetzten) Schiebehebedaches,
- Fig. 14: eine abgebrochene Schnittansicht entlang der Linie XIV-XIV in Fig. 11,
- Fig. 15: eine abgebrochene Schnittansicht entlang der Linie XV-XV in Fig. 1 und
- Fig. 16: eine vergrößerte Schnitteinzelheit entsprechend dem Ausschnittskreis XVI in Fig. 15.

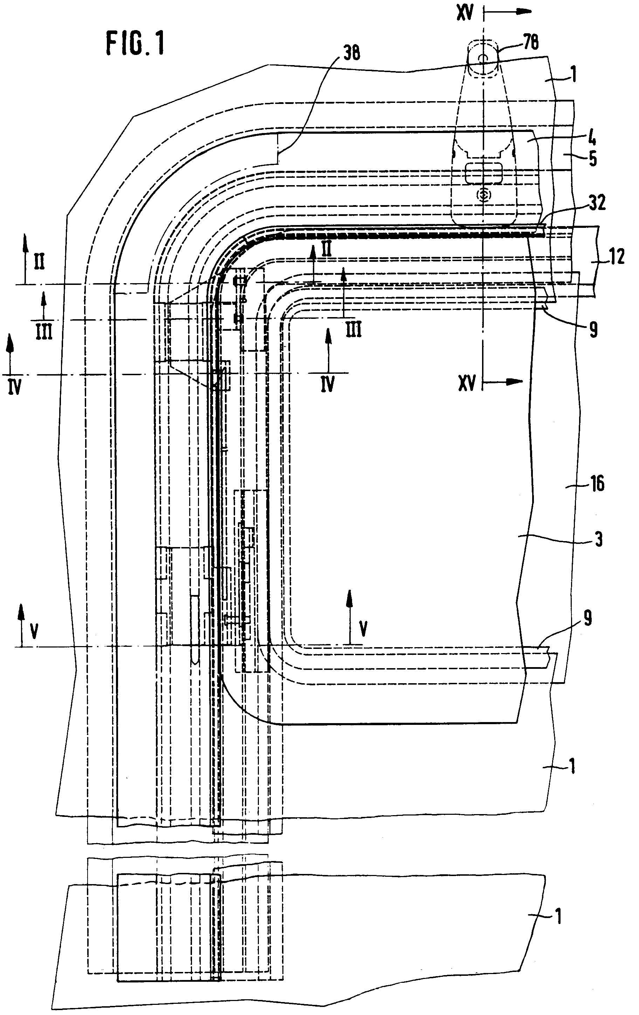

Auf die feste Dachfläche 1 einer Kraftfahrzeugkarosserie ist eine Schiebehebedacheinheit aufgesetzt. In der Dachfläche 1 befindet sich eine Dachöffnung 2, die mit einem Schiebedeckel 3 verschließbar ist, der als Glasdeckel ausgeführt ist, jedoch auch aus einem Metall oder Kunststoff gebildet sein kann. Der Schiebedeckel 3 überlappt in seiner in Fig. 1 dargestellten Schließstellung die Dachöffnung 2 allseits und ist zur Freigabe der Dachöffnung 2 über die hintere feste Dachfläche 1 verschiebbar. Der Schiebedeckel 3 ist vorn und seitlich von einem Außenrahmen 4 umgeben, an dem der Schiebedeckel 3 auf noch zu erläuternde Weise geführt ist und der als Montagerahmen der vormontierten Schiebehebedacheinheit dient. Der Aussenrahmen 4 ist nach hinten offen (Fig. 1) und erstreckt sich mit seinen seitlichen Schenkeln über den gesamten Öffnungsverschiebeweg des Schiebedeckels 3. Unterhalb der festen Dachfläche 1 ist ein dem Außenrahmen 4 gegenüberliegender Gegenrahmen 5 angebracht, der mit dem Außenrahmen 4 durch Schrauben 6 unter Zwischenlage eines Dichtstreifens 7 zwischen dem Außenrahmen 4 und der Dachfläche 1 fest verbunden ist. Der Gegenrahmen 5 umgibt die Dachöffnung 2 ebenfalls an drei Seiten und ist mit seinen freien Enden auch nach hinten gerichtet, wobei die Länge der seitlichen Schenkel der Länge der seitlichen Schenkel des Außenrahmens 4 angepaßt ist.

Die feste Dachfläche 1 ist an der Dachöffnung 2 mit einer umlaufend gleichen Aufkantung 8 versehen, auf welche ebenfalls umlaufend ein über seine gesamte Länge gleichbleibend ausgebildetes Abdichtprofil 9 aufgesteckt ist, das dem geschlossenen Schiebedeckel 3 von unten unter Herbeiführung einer umfänglichen Abdichtung der Dachöffnung 2 anliegt. Das Abdichtprofil ist in seinem oberen dem Schiebedeckel 3 zugekehrten Bereich mit einer seine Flexibilität erhöhenden Hohlkammer 10 versehen.

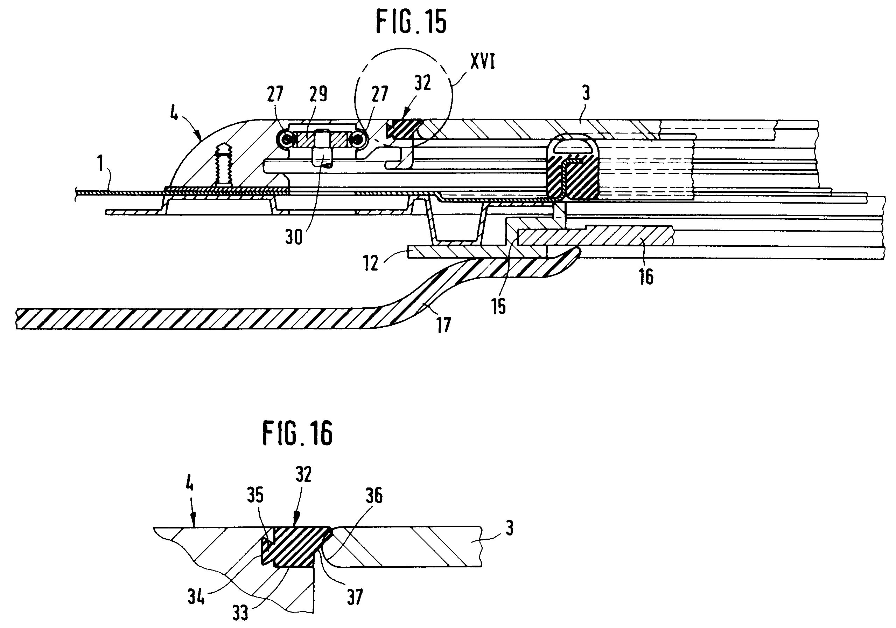

Der Gegenrahmen 5 ist im gezeigten Beispiel aus Blech profiliert und weist über seine gesamte Länge durchgehend ein gleichbleibendes Profil auf. In der Nähe seines Innenrandes befindet sich eine nach unten vorspringende Sicke 11, an welcher ein die Dachöffnung 2 ebenfalls an drei Seiten umgebender und mit seinen Enden nach hinten gerichteter Führungsrahmen 12 durch Klips 13 od.dgl. befestigt ist, welcher an seiner Innenseite mit einer nach oben zur Anlage an die feste Dachfläche 1 bestimmten Vorsprungsleiste 14 versehen ist, die etwa mit der Aufkantung 8 der Dachfläche 1 bündig liegt. Weiterhin ist der Führungsrahmen 12 in seiner gesamten Länge mit einer nach innen gerichteten Führungsnut 15 versehen, in welcher die seitlichen Ränder einer verschiebbaren Sonnenschutzplatte 16 geführt sind. Ist die Sonnenschutzplatte 16 zur vollständigen Abdeckung der Dachöffnung 2 ganz nach vorn geschoben, wie das in Fig. 15 angedeutet ist, so ist ihr vorderer Rand in das vordere Querteil der Führungsnut 15 eingeschoben. Wenn der Schiebedeckel 3 aus Metall hergestellt ist, kann auf eine Sonnenschutzplatte 16 verzichtet werden. Die Innenseite der Dachfläche 1 einschließlich des Gegenrahmens 5 und des Führungsrahmens 12 ist durch eine den oberen Fahrzeuginnenraum auskleidende Himmelschale 17 abgedeckt, die einen etwa der Dachöffnung 2 entsprechenden Ausschnitt aufweist.

Der Außenrahmen 4 ist einteilig mit integrierten Führungsschienen ausgebildet und weist einen nach unten und innen offenen Profilkanal 18 auf, von welchem zwei nebeneinander angeordnete und die Führungsschienen bildende Führungsnuten 19 und 20 ausgehen. Die Führungsnuten 19 und 20 haben einen geringen Höhenversatz, so daß unterhalb eines die Führungsnut 20 nach unten begrenzenden Profilflansches 21 ein seitlicher Durchtrittsspalt 22 zwischen der Dachfläche 1 und dem Profilflansch 21 für den Durchgriff der noch zu beschreibenden Führungsteile für den Schiebedeckel 3 gebildet ist. In den Führungsnuten 19 und 20 sind zu beiden Seiten des Schiebedeckels 3 jeweils ein vorderer Führungsschuh 23 und ein hinterer Führungsschuh 24 verschiebbar geführt.

Weiterhin befinden sich in dem Außenrahmen 4 oberhalb der Führungsnuten 19 und 20 für die Führungsschuhe 23 und 24 zwei nebeneinander angeordnete Führungskanäle 25 und 26 für darin drucksteif verschiebbar geführte und flexible Antriebskabel 27. An jeder Deckelseite ist eines der Antriebskabel 27 über einen Mitnehmer 28 kraftschlüssig mit einem hinteren Führungsschuh 24 verbunden. Die Führungskanäle 25 und 26 öffnen sich schlitzförmig zum Profilkanal 18 hin, so daß die Mitnehmer 28 durch die schlitzförmigen Öffnungen hindurch an die jeweiligen Antriebskabel 27 angreifen können. Im vorderen Querteil des Außenrahmens 4 ist im Bereich zwischen den beiden Antriebskabeln 27 ein Antriebsritzel 29 drehbar gelagert. Die Antriebskabel 27 sind in der für Kabelantriebe dieser Art üblichen Weise mit einer schraubenförmigen Drahtumfangswicklung versehen, welche zahnstangenähnlich mit der Verzahnung des Antriebsritzels 29 eingreift, so daß Drehungen des Antriebsritzels 29 jeweils Verschiebungen der Antriebskabel 27, der damit verbundenen hinteren Führungsschuhe 24 und der damit verbundenen noch näher zu erläuternden Funktionsteile bewirken. Wie aus Fig. 15 weiterhin hervorgeht, ist mit dem Antriebsritzel 29 eine Antriebswelle 30 drehfest verbunden, die zu einer hand- oder motorbetätigten Antriebsvorrichtung führt.

Der Außenrahmen 4 ist an seinem Außenumfang zur festen Dachfläche 1 hin nach außen zu abgeschrägt bzw. angerundet, um einen strömungsgünstigen Übergang zur Dachfläche 1 zu bilden.

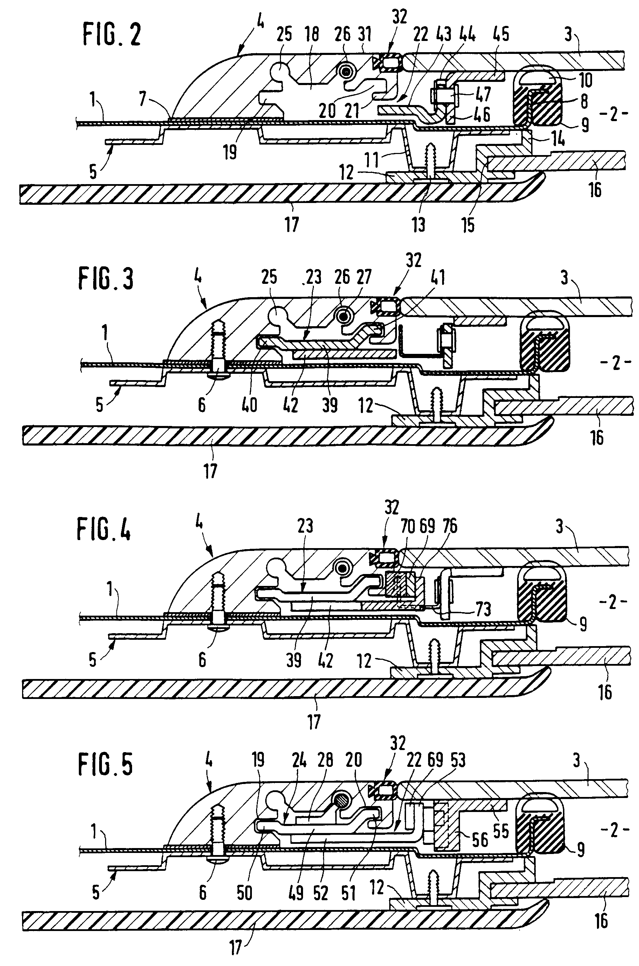

Der Außenrahmen 4 liegt mit seiner oberen Fläche 31 unter Zwischenlage einer Randspaltabdichtung 32 mit der oberen Fläche des Schiebedeckels 3 bündig. Dadurch erhält das Aufsatzschiebedach eine völlig glatte Außenform. Die Randspaltabdichtung umgibt den Deckel in seiner Schließlage an seinem vorderen und an seinen beiden Seitenrändern und erstreckt sich darüberhinaus über die volle Länge der seitlichen Schenkel des Außenrahmens 4. Zur Anbringung der Randspaltabdichtung 32 ist an der oberen Innenkante des Außenrahmens 4 eine Aufnahmenut 33 vorgesehen. In der senkrechten die Aufnahmenut 33 bildenden Fläche ist eine hinterschnittene Befestigungsnut 34 zur Aufnahme eines schwalbenschwanzförmigen Befestigungsvorsprungs 35 der Randspaltabdichtung 32 vorgesehen. Im Bereich der seitlichen Schenkel des Außenrahmens 4 ist die Randspaltabdichtung 32 als Hohlkammerprofil ausgebildet, wie aus den Fig. 2 bis 5 hervorgeht. Im Bereich des vorderen Querteils des Außenrahmens 4 ist die Randspaltabdichtung 32 dagegen ohne Hohlkammer als Vollprofil ausgebildet, so daß in diesem Bereich die elastische Verformbarkeit der Randspaltabdichtung 32 herabgesetzt ist. Weiterhin ist an diesem vorderen Bereich der Randspaltabdichtung 32 eine der abgerundeten Vorderkante 36 des Schiebedeckels 3 zugeordnete Schrägfläche 37 an dem Vollmaterialprofil vorgesehen. Wenn der Schiebedeckel 3 bei seiner Schließverschiebung auf diese Schrägfläche 37 auftrifft, so wird er dadurch geringfügig nach unten verlagert und damit dem Abdichtprofil 9 angepreßt. Wird der Schiebedeckel 3 mit seiner Hinterkante nach oben verschwenkt, wird die Vorderkante 36 entlang der Schrägfläche 37 nach unten geführt, wodurch eine Spaltbildung zwischen dem Außenrahmen 4 und der Deckelvorderkante 36 verhindert wird.

Der einteilige U-förmige Außenrahmen 4 kann zur Biegeerleichterung an seinen beiden vorderen Ecken mit Ausschnitten 38 versehen sein, von denen der linke vordere Ausschnitt in Fig.1 strichpunktiert angedeutet ist. Die Ausschnitte 38 sind durch nach dem Biegen angebrachte Formeinsätze geschlossen.

Für die nähere Erläuterung der Führungs- und Funktionsteile für den Schiebedeckel 3 wird entsprechend den beigefügten Zeichnungen ausschließlich auf die in Fahrtrichtung gesehen linke Seite des Schiebehebedaches Bezug genommen, weil die rechte Seite spiegelbildlich dazu ausgeführt ist.

Der vordere Führungsschuh 23 besitzt eine Führungsplatte 39 mit nach oben und außen abgebogenen Führungsvorsprüngen 40 und 41, welche verschiebbar in die zugeordneten Führungsnuten 19 bzw. 20 eingreifen. Die Führungsvorsprünge 40 und 41 können zur Reibungsminderung mit Gleitschuhen aus Kunststoff versehen sein (nicht dargestellt). Die Führungsplatte 39 ist fest mit einer unterlegten Grundplatte 42 verbunden, die an ihrem vorderen Ende mit einem Schwenklagervorsprung 43 den Durchtrittsspalt 22 berührungsfrei durchgreift und unterhalb des Schiebedeckels 3 mit einem senkrechten Lagerschenkel 44 endet. In diesem Bereich ist in der Nähe der Deckelvorderkante und mit Abstand von der Deckellängskante ein vorderer Deckelträger 45 mit der Unterseite des Schiebedeckels 3 beispielsweise durch Kleben fest verbunden. Der Deckelträger ist winkelförmig ausgebildet und ist mit einem nach unten weisenden Schenkel 46 über einen Schwenklagerzapfen 47 mit dem Lagerschenkel 44 schwenkbar verbunden, wie aus Fig. 2 hervorgeht. Die Schwenklagerzapfen 47 auf der linken und der rechten Seite des Schiebedeckels 3 bilden eine quer zur Schieberichtung verlaufende Schwenklagerachse für den Schiebedeckel 3.

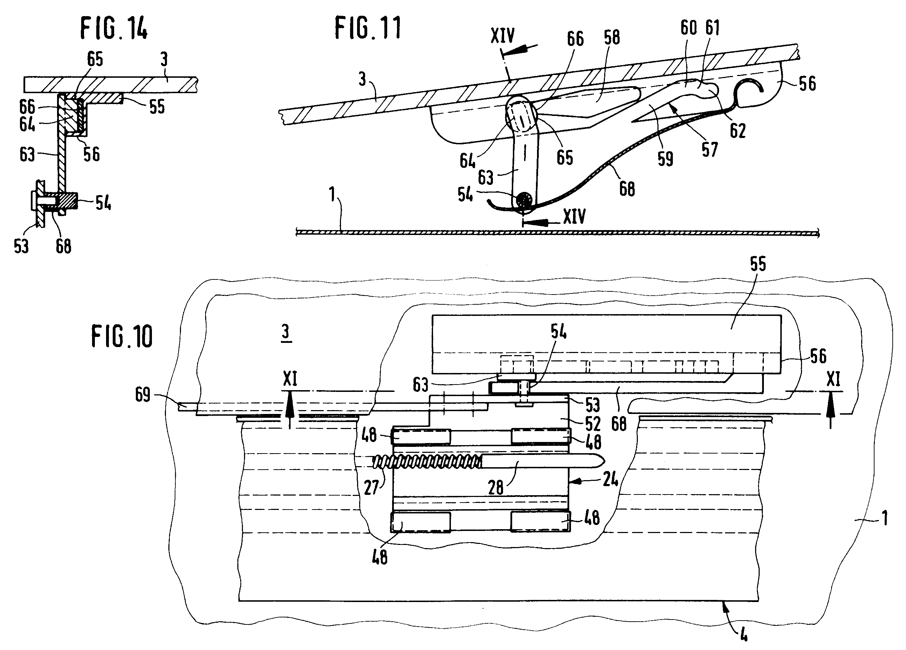

Wie aus Fig. 5 im Vergleich mit den Fig. 3 und 4 hervorgeht, ist der hintere Führungsschuh 24 dem vorderen Führungsschuh 23 entsprechend ausgebildet und besitzt ebenfalls eine Führungsplatte 49, die nach oben und außen zu Führungsvorsprüngen 50 und 51 abgebogen ist, welche verschiebbar in den zugeordneten Führungsnuten 19 bzw. 20 geführt sind. Auch hierbei können die Führungsvorsprünge 50 und 51 zur Reibungsherabsetzung mit Gleitschuhen 48 (Fig. 10) aus Kunststoff versehen sein. Mit der Führungsplatte 49 ist der bereits erwähnte Mitnehmer 28 fest verbunden. Auch hier ist die Führungsplatte 49 fest mit einer ihr unterlegten Grundplatte 52 verbunden. Die Grundplatte 52 greift durch den Durchtrittsspalt 22 berührungsfrei hindurch und endet unterhalb des Schiebedeckels 3 mit einer senkrecht nach oben gebogenen Befestigungsleiste 53. An dieser Befestigungsleiste 53 ist ein Führungsstift 54 befestigt.

In der Nähe der Deckelhinterkante und mit Abstand zur Deckellängskante befindet sich ein hinterer Deckelträger 55, welcher wiederum winkelförmig ausgebildet und an der Unterseite des Deckels durch zum Beispiel Kleben befestigt ist. Sein nach unten gerichteter Schenkel ist als Führungskulisse 56 ausgebildet, die auf noch zu beschreibende Weise mit dem Führungsstift 54 eingreift. Zur näheren Erläuterung der Führungskulisse und der mit ihr in Verbindung stehenden Teile wird nunmehr auf die Fig. 10 bis 14 Bezug genommen.

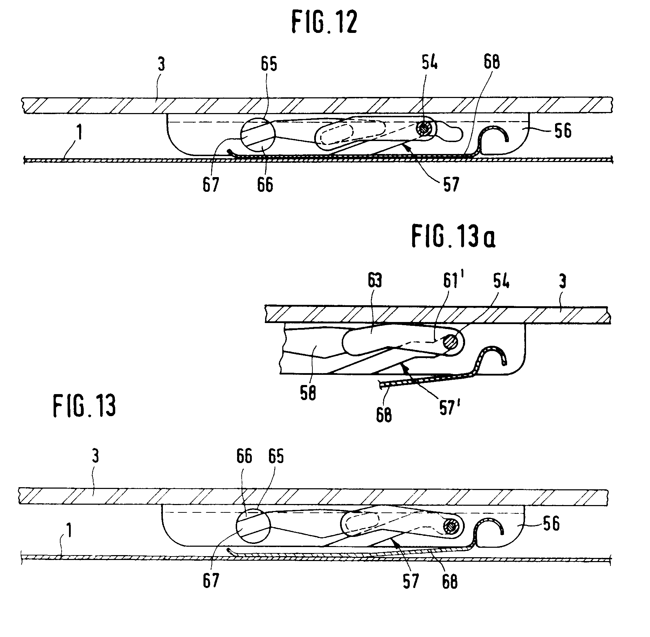

Wie am deutlichsten aus Fig. 11 hervorgeht, sind in der Führungskulisse 56 benachbart und teilweise überlappend hinten ein Führungsschlitz 57 für den Eingriff mit dem Führungsstift 54 und vorn eine langgestreckte besonders geformte Ausnehmung 58 vorgesehen. Der Führungsschlitz 57 umfaßt im wesentlichen vier Abschnitte, nämlich einen längeren gegenüber dem Schiebedeckel 3 von vorn nach hinten ansteigenden ersten geradlinigen Abschnitt 59, einen daran nach hinten gerichtet anschließenden kurzen etwa parallel zum Schiebedeckel 3 verlaufenden zweiten Abschnitt 60, einen daran anschließenden kurzen schräg nach unten gerichteten dritten Abschnitt 61 und einen kurzen daran nach hinten gerichtet anschließenden zum Schiebedeckel parallelen vierten Abschnitt 62. Der erste Abschnitt 59 ist der Ausstellbewegung des Schiebedeckels zugeordnet, der zweite Abschnitt 60 entspricht der Schließlage des Schiebedeckels 3, der dritte Abschnitt 61 ist einer vertikalen Verlagerung der Deckelhinterkante in Aufwärtsrichtung zugeordnet, und der vierte Abschnitt 62 schließlich nimmt den Führungsstift 54 bei der Öffnungsverschiebung des mit seiner Hinterkante etwas angehobenen Schiebedeckels 3 auf. In Fig. 12 befindet sich der Führungsstift 54 in dem zweiten Abschnitt 60, d.h. der Schiebedeckel 3 befindet sich in seiner Schließlage. In Fig. 13 befindet sich der Führungsstift 54 in dem vierten Abschnitt 62, d.h. diese Figur zeigt eine Stellung der Teile, die diese bei der Öffnungsverschiebung des Schiebedeckels vom Anfang bis zum Ende der Öffnungsverschiebung einnehmen. Der erste Abschnitt 59 des Führungsschlitzes 57 ist für den Austritt und den Eintritt des Führungsstiftes 54 aus der bzw. in die Führungskulisse 56 vorn geöffnet. In der Stellung des Schiebedeckels 3 gemäß Fig. 11 befindet sich der Führungsstift 54 außerhalb der Führungskulisse 56. Wie noch erläutert werden soll, bewirkt der Eingriff des Führungsstiftes 54 in den Führungsschlitz 57 der Führungskulisse 56 eine erste Phase der Ausstellbewegung bzw. eine zweite Phase der entgegengesetzten Bewegung, d.h. der Einschwenkbewegung.

Weiterhin ist zwischen dem hinteren Führungsschuh 24 und der Führungskulisse 56 ein Steuerhebel 63 vorgesehen, der einerseits an den hinteren Führungsschuh 24 angelenkt ist und andererseits dreh- und verschiebbar mit der Führungskulisse 56 verbunden ist. Dieser Steuerhebel 63 ist auf noch zu beschreibende Weise einer zweiten Phase der Ausstellbewegung bzw. einer ersten Phase der entgegengesetzt gerichteten Einschwenkbewegung zugeordnet, wobei während der Phasen der Wirksamkeit des Steuerhebels 63 der Eingriff zwischen der Führungskulisse 56 und dem Führungsstift 54 aufgehoben ist.

Im gezeigten Ausführungsbeispiel greift der Steuerhebel 63 zu seiner Anlenkung an den hinteren Führungsschuh 24 schwenkbar an den Führungsstift 54 an, wie die Fig. 11 und 14 verdeutlichen. Auf diese Weise ist der Steuerhebel 63 in einer zum Schiebedeckel 3 senkrechten Ebene schwenkbar gelagert. Am anderen Ende des Steuerhebels 63 ist dieser mit einem in die Führungskulisse 56 eingreifenden Führungsvorsprung 64 versehen. Der Führungsvorsprung 64 ist an zwei parallel gegenüberliegenden Seiten abgeflacht und besitzt eine an den beiden Enden abgerundete langgestreckte Gestalt. Bei geschlossenem Schiebedeckel 3, während der Öffnungsverschiebung, der Schließverschiebung, und der von dem Eingriff zwischen dem Führungsschlitz 57 und dem Führungsstift 54 gesteuerten Phasen der Ausstell- und Einschwenkbewegungen befindet sich der Führungsvorsprung 64 in der Ausnehmung 58, deren Formgebung durch die Abmessungen des Führungsvorsprungs 64 und den überlagerten Dreh- und Verschiebebewegungen des Führungsvorsprungs 64 in der Ausnehmung 58 bestimmt ist. Während dieser Verlagerungen des Führungsvorsprungs 64 innerhalb der Ausnehmung 58 befindet sich der Steuerhebel 63 in seinen funktionslosen Bewegungsphasen.

Die Ausnehmung 58 mündet an ihrem vorderen Ende in eine zylindrische Lageröffnung 65 ein, in welcher eine passende am Aussenumfang zylindrische Lagerscheibe 66 permanent angeordnet und drehbar gelagert ist. Die Einpassung der Lagerscheibe 66 in die Lageröffnung 65 ist aber derart, daß sich die Lagerscheibe in ihrer Lageröffnung 65 nicht unbeabsichtigt, d.h. ohne Eingriff mit dem Führungsvorsprung 64, drehen kann. In der Lagerscheibe 66 befindet sich ein diametral gerichteter, an beiden Seiten bis zum Außenumfang der Lagerscheibe 6 durchgehender Schlitz 67 zur passenden unverdrehbaren Aufnahme des Führungsvorsprungs 64 während der zweiten Phase der Ausstellbewegung bzw. der ersten Phase der entgegengesetzt gerichteten Einschwenkbewegung des Schiebedeckels 3.

Am hinteren Ende der Führungskulisse 56 ist eine Blattfeder 68 starr befestigt. Ihr freier nach vorn weisender Arm erstreckt sich parallel und unterhalb der Führungskulisse 56 und ist insgesamt in Richtung der Führungskulisse 56 vorgespannt. Daher liegt die Blattfeder 68 dem Führungsstift 54 unter Federkraft an, sobald dieser am Ende der ersten Phase der Ausstellbewegung aus dem Führungsschlitz 57 austritt. Dadurch wirkt die Blattfeder 68 durch das Systemspiel verursachten Klappergeräuschen entgegen.

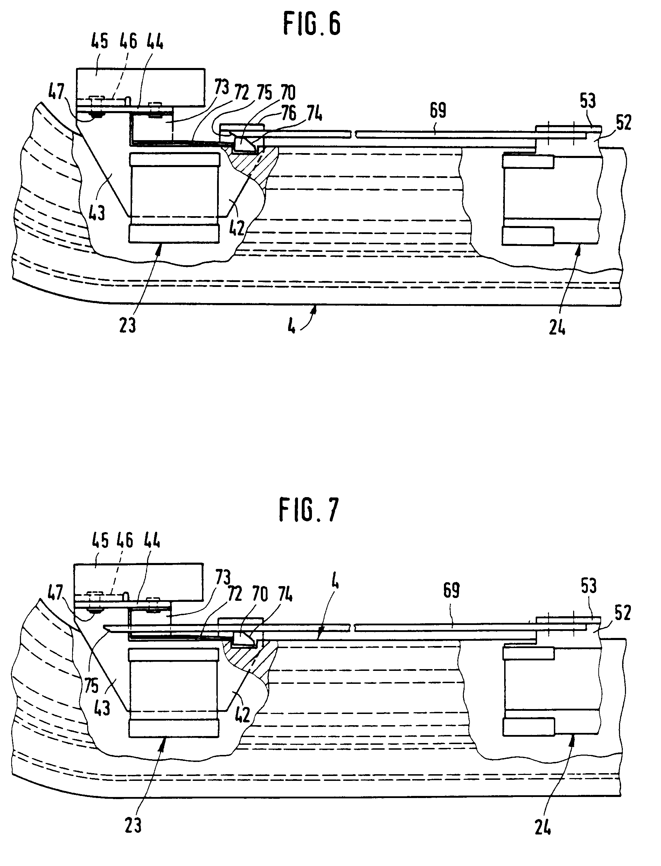

Zur näheren Erläuterung einer Sperrvorrichtung für unerwünschte Verschiebebewegungen des Deckels 3 wird nachfolgend auf die Fig. 6 bis 10 Bezug genommen. Die hier dargestellten Sperrelemente können in spiegelbildlicher Anordnung auf beiden Seiten der Dachöffnung vorgesehen sein. Sie umfassen einen am hinteren Führungsschuh 24 befestigten und am benachbarten vorderen Führungsschuh 23 verschiebbar geführten Steuerstab 69 sowie ein beweglich am vorderen Führungsschuh 23 angebrachtes, von dem Steuerstab 69 auf noch zu beschreibende Weise betätigtes Rastelement 70, welches einer Rastausnehmung 71 an der Führungsschiene für die Führungsschuhe 23 und 24 zugeordnet ist. Im gezeigten Beispiel befindet sich die Rastausnehmung 71 in der dem Schiebedeckel 3 zugekehrten Fläche des Außenrahmens 4.

Der Steuerstab 69 ist an der Befestigungsleiste 53 der Grundplatte 52 des hinteren Führungsschuhs 24 starr befestigt. Das Rastelement 70 ist schwenkbar am vorderen Führungsschuh 23 befestigt, im gezeigten Beispiel mittels einer Blattfeder 72, durch welche das Rastelement 70 ständig in Richtung des Austretens aus der Rastausnehmung 71 belastet ist. Die Blattfeder 72 ist Bestandteil eines am Lagerschenkel 44 des Schwenklagervorsprungs 43 befestigten Federhalters 73. Das Rastelement 70 weist an seinem dem hinteren Führungsschuh 24 zugekehrten Ende eine Auflaufschräge 74 für das freie Ende des Steuerstabs 69 auf, welche so gerichtet ist, daß das ihr zugeordnete Ende des Steuerstabs 69 das Rastelement 70 in Verlagerungsrichtung auf den Außenrahmen 4 zu belastet. Auch das Ende des Steuerstabs 69 ist mit einer Schrägfläche 75 versehen, die der Auflaufschräge 74 am Rastelement 70 zugeordnet ist und zu dieser parallel ausgerichtet ist.

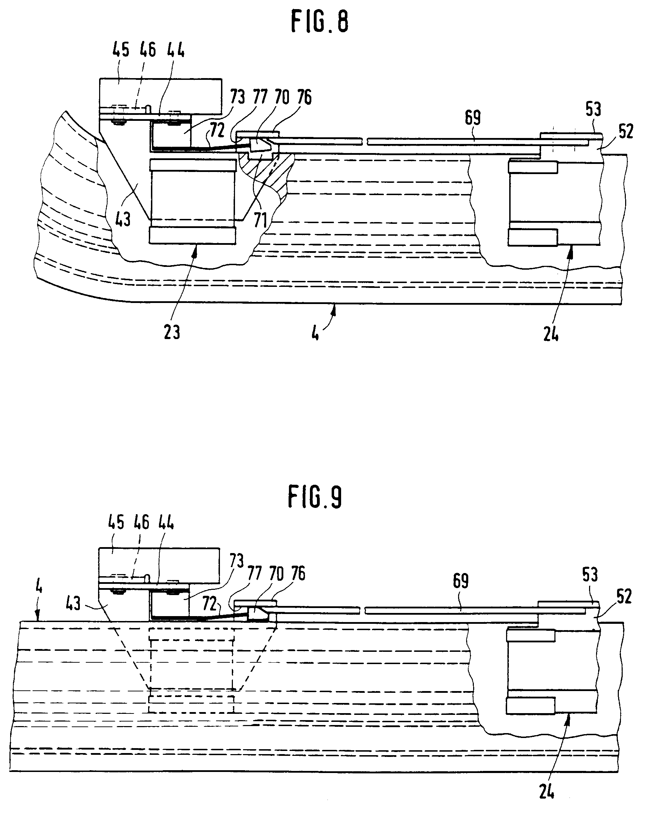

Am hinteren Ende der Grundplatte 42 des vorderen Führungsschuhs 23 befindet sich eine rechtwinklig nach oben abgebogene Aufkantung 76, die innen eine Führungsfläche 77 für den ihr in jeder Schiebedeckelstellung anliegenden Steuerstab 69 bildet. Der Abstand der Führungsfläche 77 zu der benachbarten parallelen Fläche des Außenrahmens 4 ist so gewählt, daß dieser Abstand etwa der Querabmessung des Rastelements 70 entspricht, wie am besten aus Fig. 9 hervorgeht. Das Summenmaß aus dem vorerwähnten Abstand und der Tiefe der Rastausnehmung 71 entspricht etwa der Querabmessung des Rastelements 70 zuzüglich der Dicke des Steuerstabs 69, was die Fig. 6 und 7 verdeutlichen. Bei geschlossenem Schiebedeckel (Fig. 6) befindet sich das Rastelement 70 in der Rastausnehmung 71 und wird darin von dem sich an der Führungsfläche 77 abstützenden Steuerstab 69 gehalten. Auch in ausgestellten Lagen des Schiebedeckels wird das Rastelement 70 durch den Steuerstab 69 in der Rastausnehmung 71 gehalten, wie aus Fig. 7 hervorgeht. Nach Anheben der Hinterkante des Schiebedeckels 3 (Aufsatzschiebehebedach) bzw. nach Absenken der Hinterkante des Schiebedeckels 3 (Schiebehebedach) hat der Steuerstab 69 das Rastelement 70 freigegeben, so daß dieses aus der Rastausnehmung 71 austreten kann, wie Fig. 8 veranschaulicht. Nach Aufhebung der Verrastung kann der Schiebedeckel ausgehend von der in Fig. 8 dargestellten Lage nach hinten verschoben werden. Bei Verschiebung des Schiebedeckels 3 in Richtung seiner Schließlage stützt sich die Schrägfläche 75 des Steuerstabs 69 an der Auflaufschräge 74 des Rastelements 70 ab, kann jedoch das Rastelement 70 nicht verlagern, weil dieses an der zugekehrten Fläche des Außenrahmens 4 gleitet. Dabei kann aber der Steuerstab 69 das Rastelement 70 wegen seiner Anlage an der Führungsfläche 77 auch nicht überfahren. Der durch das Antriebskabel 27 in Schließverschieberichtung angetriebene hintere Führungsschuh 24 verschiebt daher mittels des Steuerstabs 69 den vorderen Führungsschuh 23 und damit den Schiebedeckel 3. Die Schließverschiebung wird auf diese Weise fortgesetzt, bis das Rastelement 70 an der Rastausnehmung 71 angelangt ist und nun von dem Steuerstab 69 in diese hinein verlagert wird.

Wie ersichtlich ist, ist die Länge des Steuerstabs 69 nach Maßgabe des Abstands zwischen dem Rastelement 70 des vorderen Führungsschuhs 23 und dem hinteren Führungsschuh 24 so zu bemessen, daß der Steuerstab 69 das Rastelement 70 zur Öffnungsverschiebung des Schiebedeckels 3 vollständig freigibt (Fig. 8), dem Rastelement 70 bei Schließverschiebung jedoch mit seinem Ende kraftschlüssig anliegt (Fig. 9).

Nachfolgend wird die Wirkungsweise der vorstehend beschriebenen Schiebehebedachkonstruktion näher erläutert. In der Schließstellung des Schiebedeckels 3 (Fig. 6, 12) befindet sich das Rastelement 70 in der Rastausnehmung 71, und der Führungsstift 54 befindet sich in dem zweiten Abschnitt 60 des Führungsschlitzes 57. Soll ausgehend von dieser Schließstellung eine Öffnungsverschiebung des Schiebedeckels 3 erfolgen, so werden durch entsprechende Drehbetätigung des Antriebsritzels 29 (Fig. 15), beispielsweise mittels der in Fig. 1 dargestellten Handkurbel 78, die Antriebskabel 27 so in ihren Führungskanälen 25 und 26 verschoben, daß für die hier betrachtete Deckelseite (Fig. 10) der hintere Führungsschuh 24 nach hinten (nach rechts) verlagert wird. Hierbei verhindert der Steuerstab 69 das Austreten des Rastelements 70 aus der Rastausnehmung 71 so lange, bis der Führungsstift 54 die Hinterkante des Schiebedeckels 3 durch Gleiten im dritten Abschnitt 61 des Führungsschlitzes 57 zum mindestens partiellen Abheben des Schiebedeckels 3 von dem Abdichtprofil 9 nach oben angehoben hat. Bei der Kulissenanordnung gemäß Fig. 13a entspricht dieser Bewegungsablauf bei einem nicht auf die feste Dachfläche aufgesetzten Schiebehebedach der Bewegung des Führungsstiftes 54 in dem Abschnitt 61' des Führungsschlitzes 57'. Hierbei wird der Schiebedeckel 3 mit seiner Hinterkante abgesenkt, um nachfolgend unter die feste Dachfläche verschoben werden zu können.

Bei Fortsetzung des Verschiebeantriebs des hinteren Führungsschuhs 24 in der angegebenen Richtung gelangt der Führungsstift 54 in den vierten Abschnitt 62 des Führungsschlitzes 57, und der Steuerstab 69 gibt das Rastelement 70 frei, so daß dieses aus der Rastausnehmung 71 austreten kann. Der Schiebedeckel ist nunmehr für eine weitere Öffnungsverschiebebewegung freigegeben. Bei der Schließverschiebung erfolgen die beschriebenen Vorgänge in umgekehrter Reihenfolge.

Soll nunmehr der Schiebedeckel 3 ausgehend von seiner Schließstellung (Fig. 6, 12) in eine Lüftungsstellung mit seiner Hinterkante nach oben ausgestellt werden, so werden die Antriebskabel 27 auf die beschriebene Weise in Gegenrichtung verschiebend angetrieben, so daß für die betrachtete Deckelseite (Fig. 10) der hintere Führungsschuh 24 nach vorn (nach links) verschoben wird. Hierbei hält der Steuerstab 69 das Rastelement 70 in der Rastausnehmung 71, wodurch der vordere Führungsschuh 23 und der mit diesem verbundene Schiebedeckel 3 gegen Verschieben gesichert ist. Der Führungsstift 54 gelangt aus dem zweiten Abschnitt 60 in den ersten Abschnitt 59 des Führungsschlitzes 57. Da sich der Führungsstift 54 stets nur auf einer geradlinigen parallel zur durch die Führungsnuten 19 und 20 gebildeten Führungsschiene verlaufenden Bahn bewegen kann, der erste Abschnitt 59 des Führungsschlitzes 57 jedoch schräg verläuft, wird der Schiebedeckel 3 durch die Führungsstifte 54 hinten angehoben. Diese erste Phase der Ausstellbewegung dauert an, bis der Führungsstift 54 am Ende des ersten Abschnitts 59 angelangt ist und aus diesem austritt. Bis zu diesem Zeitpunkt ist der Steuerhebel 63 inaktiv gewesen und wurde durch den Führungsstift 54 lediglich unter zunehmender Verschwenkung im Uhrzeigersinn nach vorn mitgenommen, wobei sein Führungsvorsprung 64 innerhalb der Ausnehmung 58 verlagert wurde. Am Ende dieser Verlagerungsbewegung ist der Führungsvorsprung 64 in den Schlitz 67 der Lagerscheibe 66 eingetreten. Bei Austritt des Führungsstiftes 54 aus dem ersten Abschnitt 59 befindet sich der Führungsvorsprung 64 vollständig in dem Schlitz 67, so daß sich nunmehr für die zweite Phase der Ausstellbewegung der Führungsvorsprung 64 zusammen mit der von ihm drehend mitgenommenen Lagerscheibe 66 in der Lageröffnung 65 drehen kann. Eine weitere Bewegung des Führungsstiftes 54 in der angegebenen Richtung führt nunmehr zu einer weiteren Verschwenkung des den Schiebedeckel 3 ausstellenden Steuerhebels 63, bis etwa die in Fig. 11 dargestellte maximale Ausstellage erreicht ist. Beim Einschwenken des Schiebedeckels erfolgt der beschriebene Bewegungsablauf in umgekehrter Reihenfolge, wobei auch hierbei das Rastelement 70 von dem Steuerstab 69 in der Rastausnehmung 71 zur Sicherung des Schiebedeckels gegen Verschieben festgehalten wird. Beim Verschwenken des Schiebedeckels 3 verschwenkt dieser um die von den Schwenklagerzapfen 47 gebildete Schwenkachse.

Die beschriebene Sonnenschutzplatte 16 ist von den Verschiebebewegungen des Schiebedeckels 3 unabhängig und kann in jeder Stellung des Schiebedeckels 3 unabhängig verschoben werden.

Wie insbesondere die Fig. 11 bis 13 verdeutlichen, wird durch die Anordnung des Steuerhebels 63 mit seinem Drehlager in der Führungskulisse 56 vorteilhaft erreicht, daß ein zum vollständigen Ausstellen der Deckelhinterkante langer Verschiebeweg des hinteren Führungsschuhs 24 in Vorwärtsrichtung und damit verbunden ein langgestreckter geneigter erster Abschnitt eines Führungsschlitzes teilweise ersetzt wird durch eine Hebelausstellung. Dadurch kann der die erste Phase der Ausstellbewegung bewirkende Führungsschlitz 57 erheblich verkürzt ausgebildet werden. Im Ergebnis wird durch diese Anordnung die Abstützung des ausgestellten Schiebedeckels verbessert, weil die hintere Abstützung näher an die Deckelhinterkante heranrückt, wodurch die Abstützbasis auch des voll ausgestellten Schiebedeckels vergleichsweise groß ist.

Bei der beschriebenen Aufsatzschiebehebedachkonstruktion befinden sich alle die Führungsschuhe 23, 24 mit dem Schiebedeckel 3 verbindenden Funktionsteile der Dachkonstruktion zu beiden Seiten der Dachöffnung 2 bei geschlossenem Schiebedeckel jeweils geschützt innerhalb eines Raums, der durch den Außenrahmen 4, der Innenfläche des Schiebedeckels 3, der Aufkantung 8 mit Abdichtprofil 9 und der Oberseite der festen Dachfläche 1 begrenzt ist.

Die Ausstell- oder Hebefunktion der beschriebenen Aufsatzschiebehebedachkonstruktion wird dadurch gewährleistet, daß alle an den Deckelschwenkbewegungen teilnehmenden Funktionsteile, d.h. die Führungskulissen 56, die Steuerhebel 63, die Blattfedern 68 und die Deckelträger 45, 55 nicht über die Seitenränder des Schiebedeckels 3 vorstehen, sondern dahinter zurückspringend angeordnet sind.

## Patentansprüche

1. Aufsatzschiebedach für Kraftfahrzeuge, mit einem oberhalb der festen Dachfläche (1) mit Führungsschuhen (23, 24) an seitlichen Führungsschienen verschiebbar geführten Schiebedeckel (3), der in seiner Schließstellung eine Dachöffnung (2) allseits überlappt und zur Freigabe der Dachöffnung (2) über die hintere feste Dachfläche verschiebbar ist, wobei der Schiebedeckel (3) vorn und seitlich von einem Außenrahmen (4) umgeben ist, dem ein unterhalb der festen Dachfläche angebrachter Gegenrahmen (5) gegenüberliegt, und wobei dem Schiebedeckel zur Abdichtung der Dachöffnung (2) von unten ein Abdichtprofil (9) anliegt, dadurch gekennzeichnet, daß der Außenrahmen (4) einteilig mit integrierten Führungsschienen (Führungsnuten 19, 20) ausgebildet ist und einen nach unten und innen offenen Profilkanal (18) mit nebeneinander angeordneten Führungsnuten (19, 20) für die Führungsschuhe (23, 24) aufweist, und daß der Außenrahmen (4) mit seiner oberen Fläche (31) unter Zwischenlage einer Randspaltabdichtung (32) bündig mit der oberen Fläche des Schiebedeckels (3) liegt.

2. Aufsatzschiebedach nach Anspruch 1, mit an den Seitenrändern des Schiebedeckels und an dessen Unterseite befestigten Führungskulissen, mit welchen mit den Führungsschuhen verbundene Führungselemente zur Erzielung einer zusätzlichen Hebefunktion des zu diesem Zweck in der Nähe seiner Vorderkante schwenkbar gelagerten Schiebedeckels eingreifen, wobei mit den Führungsschuhen an den Führungsschienen geführte Antriebskabel verbunden sind, dadurch gekennzeichnet, daß die Führungskulissen (56) und die Führungselemente, soweit letztere an den Schwenkbewegungen des Schiebedeckels (3) teilnehmen, nicht über die Seitenränder des Schiebedeckels (3) nach außen vorstehend angeordnet sind.

3. Aufsatzschiebedach nach Anspruch 1 oder 2, dadurch gekennzeichnet, daß die feste Dachfläche (1) an der Dachöffnung (2) mit einer umlaufend gleichen Aufkantung (8) versehen ist, an welcher das Abdichtprofil (9) umlaufend angebracht ist.

4. Aufsatzschiebedach nach einem der Ansprüche 1 bis 3, dadurch gekennzeichnet, daß in dem Außenrahmen (4) zwei Führungskanäle (25, 26) für die Antriebskabel (27) nebeneinander und sich zum Profilkanal (18) schlitzförmig öffnend oberhalb der Führungsnuten (19, 20) vorgesehen sind.

5. Aufsatzschiebedach nach einem der Ansprüche 1 bis 4, dadurch gekennzeichnet, daß der Außenrahmen (4) an seiner Außenseite zur festen Dachfläche (1) hin nach außen zu abgeschrägt ist.

6. Aufsatzschiebedach nach einem der Ansprüche 1 bis 5, dadurch gekennzeichnet, daß der Außenrahmen (4) an seinen beiden Ecken außen zur Biegeerleichterung mit Ausschnitten (38) versehen ist, die durch nach dem Biegen angebrachte Formeinsätze geschlossen sind.

7. Aufsatzschiebedach nach einem der Ansprüche 1 bis 6, dadurch gekennzeichnet, daß an der oberen Innenkante des Außenrahmens (4) eine Aufnahmenut (33) zur Anbringung der Randspaltabdichtung (32) vorgesehen ist.

8. Aufsatzschiebedach nach Anspruch 7, dadurch gekennzeichnet, daß in mindestens einer der die Aufnahmenut (33) bildenden Flächen eine hinterschnittene Befestigungsnut (34) zur Aufnahme eines Befestigungsvorsprungs (35) der Randspaltabdichtung (32) vorgesehen ist.

9. Aufsatzschiebedach nach einem der Ansprüche 1 bis 8, dadurch gekennzeichnet, daß die Randspaltabdichtung (32) über die gesamte Länge des Außenrahmens (4) durchgehend ausgebildet ist.

10. Aufsatzschiebedach nach einem der Ansprüche 1 bis 9, dadurch gekennzeichnet, daß die Randspaltabdichtung (32) seitlich als Hohlkammerprofil und vorn als vergleichsweise weniger leicht elastisch verformbares Vollmaterialprofil ausgebildet ist, wobei eine der abgerundeten Vorderkante (36) des Schiebedeckels (3) zugeordnete Schrägfläche (37) an dem Vollmaterialprofil vorgesehen ist, durch die der geschlossene Schiebedeckel (3) dem Abdichtprofil (9) angedrückt ist.

11. Aufsatzschiebedach nach einem der Ansprüche 1 bis 10, dadurch gekennzeichnet, daß der Außenrahmen (4) auf der festen Dachfläche (1) durch den mit ihm verschraubten, der Unterseite der festen Dachfläche (1) anliegenden einteilig aus Blech profilierten Gegenrahmen (5) befestigt ist.

12. Aufsatzschiebedach nach einem der Ansprüche 1 bis 11, dadurch gekennzeichnet, daß an nach unten gerichteten Vorsprüngen (Sicke 11) des Gegenrahmens (5) ein Führungsrahmen (12) für eine verschiebbare Sonnenschutzplatte (16) und ein den Gegenrahmen (5) und den Führungsrahmen (12) nach unten abdeckender Formhimmel (Himmelschale 17) befestigt sind.

## Claims

1. Top sliding roof for automobiles, comprising a sliding lid (3) slidably guided above the fixed roof surface (1) by guide shoes (23, 24) on lateral guide rails, which sliding lid in its closed position overlaps a roof opening (2) on all sides and is slidable over the rear, fixed roof surface to expose the roof opening (2), wherein the sliding lid (3) is surrounded at front and sides by an outer frame (4), opposite which is a counter-frame (5) mounted underneath the fixed roof surface, and wherein a sealing profile (9) bears from below against the sliding lid for the purpose of sealing the roof opening (2), **characterized in that** the outer frame (4) is constructed in one piece with integrated guide rails (guide grooves 19, 20) and possesses a downwardly and inwardly open profiled channel (18) with guide grooves (19, 20) disposed alongside each other for the guide shoes (23, 24), and that the outer frame (4) lies with its upper surface (31) flush with the upper surface of the sliding lid (3), with the interposition between them of an edge gap seal (32).

2. Top sliding roof according to Claim 1, comprising guide blocks at the lateral edges of the sliding lid and fixed to its underside, with which guide elements connected to the guide shoes engage for achieving an additional lifting function of the sliding lid, pivotally journalled for this purpose in the vicinity of its front edge, wherein drive cables guided on the guide rails being connected to the guide shoes, **characterized in that** the guide blocks (56) and the guide elements, in so far as the latter participate in the pivotal movements of the sliding lid (3), are arranged not to project outwardly beyond the lateral edges of the sliding lid (3).

3. Top sliding roof according to Claim 1 or 2, **characterized in that** the fixed roof surface (1) is provided at the roof opening (2) with a peripheral, uniform upward flange (8), onto which the sealing profile (9) is fitted all around.

4. Top sliding roof according to one of Claims 1 to 3, **characterized in that**, in the outer frame (4), two guide channels (25, 26) for the drive cables (27) are provided alongside each other and opening in a slit-shape to the profiled channel (18) above the guide grooves (19, 20).

5. Top sliding roof according to one of Claims 1 to 4, **characterized in that** the outer frame (4) is chamfered outwardly at its outer side towards the fixed roof surface (1).

6. Top sliding roof according to one of Claims 1 to 5, **characterized in that** the outer frame (4) is provided externally at its two corners with cut-outs (38) to facilitate bending, which after bending are closed by fitted moulded inserts.

7. Top sliding roof according to one of Claims 1 to 6, **characterized in that** a seating groove (33) for the fitting of the edge gap seal (32) is provided at the upper, inner edge of the outer frame (4).

8. Top sliding roof according to Claim 7, **characterized in that**, in at least one of the surfaces forming the seating groove (33), a back-cut fixing groove (34) is provided for receiving a fixing projection (35) of the edge gap seal (32).

9. Top sliding roof according to one of Claims 1 to 8, **characterized in that** the edge gap seal (32) is constructed continously over the entire length of the outer frame (4).

10. Top sliding roof according to one of Claims 1 to 9, **characterized in that** the edge gap seal (32) is constructed at the sides as a hollow chamber profile and at the front as a comperatively less easily elastically deformable solid material profile, wherein an inclined surface (37) associated with the rounded front edge (36) of the sliding lid (3) being provided on the solid material profile, by which inclined surface the closed sliding lid (3) is pressed against the sealing profile (9).

11. Top sliding roof according to one of Claims 1 to 10, **characterized in that** the outer frame (4) is fixed on the fixed roof surface (1) by the single-piece counter-frame (5), profiled from metal sheet, screwed to the outer frame and bearing against the underside of the fixed roof surface (1).

12. Top sliding roof according to one of Claims 1 to 11, **characterized in that** a guide frame (12) for a displaceable solar protective panel (16) and a shaped liner (lining shell 17), covering the counter-frame (5) and the guide frame (12) from beneath, are fixed to downwardly directed projections (corrugation 11) of the counterframe (5).

## Revendications

1. Toit coulissant en applique pour des véhicules automobiles, comportant un couvercle coulissant (3) guidé en déplacement au-dessus de la surface de toit fixe (1) avec des patins de guidage (23, 24) le long de rails de guidage latéraux, ce couvercle recouvrant de tous les côtés dans sa position de fermeture une ouverture de toit (2) et étant mobile sur la surface de toit arrière fixe pour libérer l'ouverture de toit (2), et le couvercle coulissant (3) étant entouré en avant et latéralement par un cadre extérieur (4) qui est en vis-à-vis d'un cadre complémentaire (5) fixé au-dessous de la surface de toit fixe, et un profilé d'étanchement (9) s'appuyant depuis le bas contre le couvercle coulissant pour étancher l'ouverture de toit (2), caractérisé en ce que le cadre extérieur (4) est réalisé en une seule pièce avec des rails de guidage intégrés (gorges de guidage 19, 20) et présente un canal profilé (18) ouvert vers le bas et vers l'intérieur présentant des gorges de guidage (19, 20) agencées l'une à côté de l'autre pour les patins de guidage (23, 24), et en ce que le cadre extérieur (4) est en affleurement par sa face supérieure (31) avec la face supérieure du couvercle coulissant (3), avec interposition d'un joint de fente marginale (32).

2. Toit coulissant en applique selon la revendication 1, comportant des coulisses de guidage fixées aux bordures latérales du couvercle coulissant et sur sa face inférieure, avec lesquelles s'engagent des éléments de guidage reliés aux patins de guidage pour atteindre une fonction de soulèvement supplémentaire du couvercle coulissant monté en basculement à cet effet à proximité de son arête avant, des câbles d'entraînement guidés dans les rails de guidage étant reliés aux patins de guidage, caractérisé en ce que les coulisses de guidage (56) et les éléments de guidage, dans la mesure où ces derniers participent aux mouvements de basculement du couvercle coulissant (3), ne sont pas agencés de façon à faire saillie vers l'extérieur au-delà des bordures latérales du couvercle coulissant (3).

3. Toit coulissant en applique selon l'une ou l'autre des revendications 1 et 2, caractérisé en ce que la surface de toit fixe (1) est pourvue au niveau de l'ouverture de toit (2) d'un rebord (8) constant sur tout le pourtour, sur lequel est fixé tout autour le profilé d'étanchement (9).

4. Toit coulissant en applique selon l'une quelconque des revendications 1 à 3, caractérisé en ce qu'il est prévu dans le cadre extérieur (4) deux canaux de guidage (25, 26) pour les câbles d'entraînement (27) l'un à côté de l'autre et en s'ouvrant en forme de fente vers le canal profilé (18) au-dessus des gorges de guidage (19, 20).

5. Toit coulissant en applique selon l'une quelconque des revendications 1 à 4, caractérisé en ce que le cadre extérieur (4) est biseauté vers l'extérieur sur sa face extérieure vers la surface de toit fixe (1).

6. Toit coulissant en applique selon l'une quelconque des revendications 1 à 5, caractérisé en ce que le cadre extérieur (4) est pourvu à l'extérieur, au niveau de ses deux coins et pour faciliter la flexion, de découpes (38) qui sont refermées par des inserts en forme agencés après la flexion.

7. Toit coulissant en applique selon l'une quelconque des revendications 1 à 6, caractérisé en ce qu'il est prévu sur l'arête intérieure supérieure du cadre extérieur (4) une gorge de réception (33) pour fixer le joint de fente marginale (32).

8. Toit coulissant en applique selon la revendication 7, caractérisé en ce qu'il est prévu, dans l'une au moins des surfaces formant la gorge de réception (33), une gorge de fixation (34) en contre-dépouille pour la réception d'une saillie de fixation (35) du joint de fente marginale (32).

9. Toit coulissant en applique selon l'une quelconque des revendications 1 à 8, caractérisé en ce que le joint de fente marginale (32) est réalisé en continu sur toute la longueur du cadre extérieur (4).

10. Toit coulissant en applique selon l'une quelconque des revendications 1 à 9, caractérisé en ce que le joint de fente marginale (32) est réalisé latéralement sous forme d'un profilé à chambre creuse et à l'avant sous forme d'un profilé en matériau plein moins déformable élastiquement, une surface biseautée (37) associée à l'arête avant arrondie (36) du couvercle coulissant (3) étant prévue sur le profilé en matériau plein, grâce à laquelle le couvercle coulissant (3) fermé est appuyé contre le profilé d'étanchement (9).

11. Toit coulissant en applique selon l'une quelconque des revendications 1 à 10, caractérisé en ce que le cadre extérieur (4) est fixé sur la surface de toit fixe (1) par le cadre complémentaire (5) s'appuyant contre la face inférieure de la surface de toit fixe (1) et étant profilé en une seule pièce en tôle.

12. Toit coulissant en applique selon l'une quelconque des revendications 1 à 11, caractérisé en ce que sur les saillies dirigées vers le bas (moulures 11) du cadre complémentaire (5) sont fixés un cadre de guidage (12) pour une plaque antisolaire mobile (16) et un habillage de plafond (coque de plafond 17) recouvrant un cadre complémentaire (5) et le cadre de guidage (12) vers le bas.
